# FASCICULE DE BREVET EUROPEEN

(11) **EP 2 045 594 B1**
(45) Date de publication et mention de la délivrance du brevet: **08.11.2017**
(21) Numéro de dépôt: 08164271.2
(22) Date de dépôt: 12.09.2008
(51) Int. Cl.: G01N 11/16

(54) **Procédé et système pour la détermination de la viscosité d'un produit.**
Verfahren und System zur Bestimmung der Viskosität eines Produkts
Method and system for determining the viscosity of a product

(30) Priorité: 02.10.2007 FR 0758012
(43) Date de publication de la demande: 08.04.2009
(73) Titulaire: Sofraser, 45700 Villemandeur (FR)
(72) Inventeur: Belliere, Luc, 45120, CEPOY (FR)
(74) Mandataire: Pontet Allano & Associes

(56) Documents cités:
- EP-A- 0 681 176
- WO-A-98/09139
- DE-A1-102004 055 552
- FR-A- 2 462 701
- US-A- 4 920 787
- US-A1- 2002 040 592
- US-A1- 2006 131 994

## Description

La présente invention concerne un procédé pour déterminer la viscosité d'un produit. L'invention concerne également un système mettant en oeuvre le procédé selon l'invention.

Le domaine de l'invention est le domaine de la mesure de la viscosité d'un produit par la mise en oscillations d'un élément oscillant introduit au moins partiellement dans le produit. Les systèmes de mesure de la viscosité d'un produit sont communément appelés des viscosimètres.

Il existe actuellement de nombreux viscosimètres fonctionnant selon différents procédés de mesure. Parmi ces viscosimètres, on peut citer ceux mettant en oeuvre un élément oscillant autour de l'axe de l'élément oscillant ou transversalement par rapport à l'axe de l'élément oscillant.

Dans la plupart des viscosimètres actuellement connus, l'élément oscillant est mis en oscillations à sa fréquence de résonance au moyen d'une bobine recevant un signal, qu'on appellera « signal d'excitation » dans la suite de la description. La viscosité du produit est déterminée en fonction d'un signal, qu'on appellera « signal de réception » dans la suite de la description, image des oscillations de l'élément oscillant. Ce sont les oscillations de l'élément oscillant qui génèrent ce signal de réception dans une bobine réceptrice positionnée à proximité de l'élément oscillant.

Quel que soit le viscosimètre, l'élément oscillant est maintenu à une fréquence d'oscillations qui est la fréquence de résonance de l'élément oscillant. Autrement dit, l'élément oscillant est en maintenu en oscillations forcées, à sa fréquence de résonance, grâce à un asservissement en fréquence.

Dans certains systèmes, et en fonction du type des oscillations de l'élément oscillant, on applique au signal d'excitation un déphasage d'environ 90° par rapport au signal de réception. Néanmoins, ces systèmes mettent toujours en oeuvre un verrouillage de fréquence maintenant l'élément oscillant en régime d'oscillations forcées à la fréquence de résonance de l'élément oscillant.

Cependant, les viscosimètres actuels présentent un inconvénient majeur. En effet, l'asservissement (ou le verrouillage) en fréquence de l'élément oscillant est lent et peu stable. Par ailleurs, l'asservissement en fréquence de l'élément oscillant est très gourmand en capacité de calcul, ce qui provoque un rendement faible pour les viscosimètres actuels.

Le document WO 98/09139 décrit un capteur mettant en oeuvre des moyens piézoélectriques pour la mesure de la viscosité d'un produit.

Un but de l'invention est de proposer un procédé et un système pour la détermination de la viscosité d'un produit plus stables et présentant un rendement plus élevé que les procédés et systèmes actuels.

Un autre but de l'invention est de proposer un procédé et un système pour la détermination de la viscosité d'un produit réalisant une mesure plus rapide de la viscosité d'un produit par rapports aux procédés et systèmes actuels.

L'invention propose d'atteindre ces buts par un procédé selon la revendication 1.

Le procédé selon l'invention permet de mesurer la viscosité d'un produit au moyen d'un dispositif de mesure dont l'élément oscillant est mis en oscillation grâce un signal d'excitation dont la phase, par rapport au signal de réception, est bloquée à une valeur prédéterminée. Le signal d'excitation est donc asservi en phase, ou autrement dit, le signal d'excitation est décalé en phase d'une valeur prédéterminée, par rapport à la phase du signal de réception. L'élément oscillant oscille à sa fréquence propre et les oscillations sont libres.

Ainsi, à la différence des procédés et systèmes de l'état de l'art le procédé selon l'invention met en oeuvre un asservissement de phase et non un asservissement en fréquence. Les essais réalisés montrent qu'un asservissement en phase est plus rapide et plus stable qu'un asservissement en fréquence.

Le décalage de phase entre le signal de réception est le signal d'excitation correspond sensiblement au décalage de phase optimal permettant d'avoir une amplitude maximale des oscillations. Ce qui permet de déterminer la viscosité d'un produit avec plus de précisions et moins d'énergie, donc avec un rendement plus élevé.

La détermination du décalage de phase optimal peut être réalisée par la détermination de l'amplitude du signal de réception en fonction du décalage de phase entre le signal de réception et le signal d'excitation. En effet, l'amplitude des oscillations peut être mesurée pour un décalage de phase donnée. Cette mesure peut être réitérée pour une pluralité de valeurs de décalage de phase. Ainsi, on peut déterminer le décalage de phase optimal pour lequel l'amplitude des oscillations est maximale.

Selon un exemple non couvert par les revendications, la phase de détermination du décalage de phase optimal peut être réalisée à chaque démarrage du dispositif de mesure. Ainsi, une série de mesure de l'amplitude des oscillations en fonction du décalage de phase est réalisée à chaque démarrage et le décalage de phase optimal est déterminé.

Selon l'invention, la phase de détermination du décalage de phase peut être commune à plusieurs phases de mesure. Dans cette version, la phase de détermination du décalage de phase est réalisée une seule fois. La valeur du décalage de phase est alors mémorisée dans des moyens de mémorisation et réutilisée à chaque démarrage du dispositif de mesure sans avoir à réaliser cette phase à chaque démarrage du dispositif de mesure. Par ailleurs, dans cette version, la phase de détermination du décalage de phase optimal est réalisée pour plusieurs valeurs ou gammes de valeurs de viscosités et les valeurs de décalage de phase optimal obtenues peuvent être mémorisées.

Ainsi, le procédé selon l'invention comprend une sélection d'une gamme de viscosité et/ou d'un décalage de phase optimal prédéterminé pour cette gamme de viscosité lors d'une phase de mesure, la valeur du décalage de phase optimal pour cette gamme de viscosité étant déterminée et mémorisée.

Par ailleurs, l'élément oscillant du dispositif de mesure oscille en régime d'oscillations propres et libres. L'élément oscillant peut être en oscillations transversales par rapport à l'axe de l'élément oscillant ou en oscillations autour de son axe.

Le signal d'excitation a une intensité crête-crête constante et une fréquence sensiblement égale à la fréquence du signal de réception.

Avantageusement, le procédé selon l'invention peut en outre comprendre une mesure de la température de l'élément oscillant et une correction de dérive thermique en fonction de la température de l'élément oscillant. Bien entendu, la correction de dérive thermique est proportionnelle à la variation de la température de l'élément oscillant.

Suivant un autre aspect de l'invention, il est proposé un système selon la revendication 8.

Le système selon l'invention met en oeuvre un asservissement de phase du signal d'excitation. Les essais réalisés montrent que le système selon l'invention est plus stable et plus rapide que les systèmes de l'état de l'art qui réalisent à la différence du système selon l'invention un asservissement en fréquence du signal d'excitation.

Par ailleurs le système selon l'invention est moins gourmand en énergie et présente un meilleur rendement que les systèmes de l'état de l'art.

Dans un premier mode de réalisation du système selon l'invention, les moyens de gestion comprennent des moyens analogiques et plus particulièrement des moyens analogiques réalisant de manière analogique le décalage de phase entre le signal d'excitation et le signal de réception.

Les moyens de déphasage analogiques peuvent comprendre au moins un élément capacitif, telle qu'une capacité, éventuellement variable, réalisant le déphasage du signal d'excitation par rapport au signal de réception d'un décalage de phase correspondant sensiblement au décalage de phase optimal.

Selon un deuxième mode de réalisation, les moyens de gestion comprennent des moyens numériques tels qu'au moins un microcontrôleur prévu pour réaliser la gestion du dispositif de mesure. Dans ce mode de réalisation, le système selon l'invention se présente sous la forme d'un ensemble unique, portable, intégrant le dispositif de mesure et les moyens de gestion.

Par ailleurs le coût de fabrication d'un système réalisé selon ce deuxième mode de réalisation est plus faible.

En fonction du ou des microcontrôleur(s) mis en oeuvre, une pluralité de fonctions peuvent être réalisées directement dans le(s) microcontrôleur(s), ne nécessitant ainsi aucun autre traitement des signaux par un dispositif externe au système. En effet, un ou plusieurs microcontrôleurs adéquatement choisis permet d'intégrer totalement la gestion du dispositif de mesure et le traitement des différents signaux dans le système selon l'invention.

En effet, le microcontrôleur peut par exemple comporter une entrée pour le signal de réception et une sortie pour le signal d'excitation. Le microcontrôleur peut alors réaliser, de manière numérique le déphasage du signal d'excitation par rapport au signal de réception d'un décalage de phase correspondant sensiblement au décalage de phase optimal.

Avantageusement, les moyens de gestion peuvent en outre comprendre au moins un module de mesure de l'amplitude des oscillations de l'élément oscillant en fonction du signal de réception.

Un tel module peut par exemple comprendre au moins un capteur à effet hall prévu pour réaliser la mesure de l'amplitude des oscillations de l'élément oscillant.

Dans le deuxième mode de réalisation du système selon l'invention, le microcontrôleur peut être relié à un tel module de mesure de l'amplitude des oscillations.

Ainsi, le microcontrôleur peut avantageusement être agencé pour la détermination d'au moins un décalage de phase optimal par itérations de mesure de l'amplitude des oscillations pour un décalage de phase donné. En effet, en faisant varier progressivement le décalage de phase entre le signal de réception et le signal d'excitation et en recevant pour chaque décalage de phase l'amplitude des oscillations de l'élément oscillant mesurée par le module de mesure de l'amplitude des oscillations tel que décrit plus haut, le microcontrôleur peut déterminer le décalage de phase optimal correspondant à des oscillations de l'élément oscillant d'amplitude maximale.

Les moyens de gestion comprennent des moyens de mémorisation, tels que des mémoires EEPROM, reliés au microcontrôleur et dans lesquels sont mémorisés une pluralité de décalages de phase optimal, chacun correspondant à une gamme de viscosité. La mémorisation du décalage de phase dans les moyens de mémorisation peut être réalisé par un dispositif externe au système ou par le microcontrôleur après la détermination par celui-ci d'au moins un décalage de phase optimal pour une gamme de viscosité. Une pluralité de décalages de phases optimaux sont mémorisés dans les moyens de mémorisation, chacun des décalages de phases optimaux correspondant à une gamme de viscosité.

Le système selon l'invention comprend en outre des moyens de sélection d'un décalage de phase optimal parmi une pluralité de décalages de phase optimaux mémorisés dans les moyens de mémorisation.

Par ailleurs, les moyens de gestion peuvent comprendre au moins un convertisseur analogique-numérique réalisant une conversion analogique-numérique d'un signal analogique entrant dans les moyens de gestion tel que par exemple le signal de réception et/ou un convertisseur numérique-analogique réalisant une conversion numérique-analogique d'au moins un signal sortant des moyens de gestion tel que par exemple le signal d'excitation. Chacun des ces convertisseurs peut directement être intégré au microcontrôleur.

Avantageusement, les moyens de gestion peuvent en outre comprendre au moins un capteur de température, par exemple de type CTN ou PT100, relié au microcontrôleur, et mesurant la température de l'élément oscillant. La mesure de la température de l'élément oscillant est effectuée par la mesure et le suivi de la résistance de la bobine réceptrice. Le microcontrôleur peut alors réaliser une correction numérique de dérive thermique sur les mesures de viscosité en fonction de la température mesurée par le capteur de température.

Le système selon l'invention peut en outre comprendre au moins un module réalisant une sortie de données, vers un dispositif ou système externe sous forme d'une connexion RS232, RS422, RS485 et/ou USB.

Par ailleurs, le système selon l'invention peut comprendre des moyens de batterie, alimentant le système selon l'invention en énergie.

Dans le deuxième mode de réalisation, le système selon l'invention peut avantageusement se présenter sous la forme d'un ensemble unique, portable, dans lequel sont intégrés le dispositif de mesure et tout ou partie des moyens de gestion ainsi que les moyens de visualisation et les moyens de batterie alimentant le système.

D'autres avantages et caractéristiques apparaîtront à l'examen de la description détaillée d'un mode de réalisation nullement limitatif, et des dessins annexés sur lesquels
- la figure 1A est une représentation schématique d'une première version d'un dispositif de mesure de viscosité ;
- la figure 1B est représentation schématique d'une deuxième version d'un dispositif de mesure de viscosité ;
- la figure 2 est un graphique donnant des exemples de décalage de phase optimal ;
- la figure 3 est une représentation schématique d'un premier mode de réalisation d'une carte transducteur réalisant une gestion analogique du dispositif de mesure de viscosité ;
- la figure 4 est une représentation schématique d'un deuxième mode de réalisation d'une carte transducteur réalisant une gestion numérique du dispositif de mesure de viscosité ;
- la figure 5 est une représentation schématique d'un microcontrôleur mis en oeuvre dans la carte transducteur représentée en figure 4 ;
- la figure 6 est une représentation schématique d'une première version d'un système selon l'invention se présentant sous la forme d'un ensemble unique portable ; et
- la figure 7 est une représentation schématique d'une deuxième version d'un système selon l'invention se présentant sous la forme d'un ensemble unique non-portable.

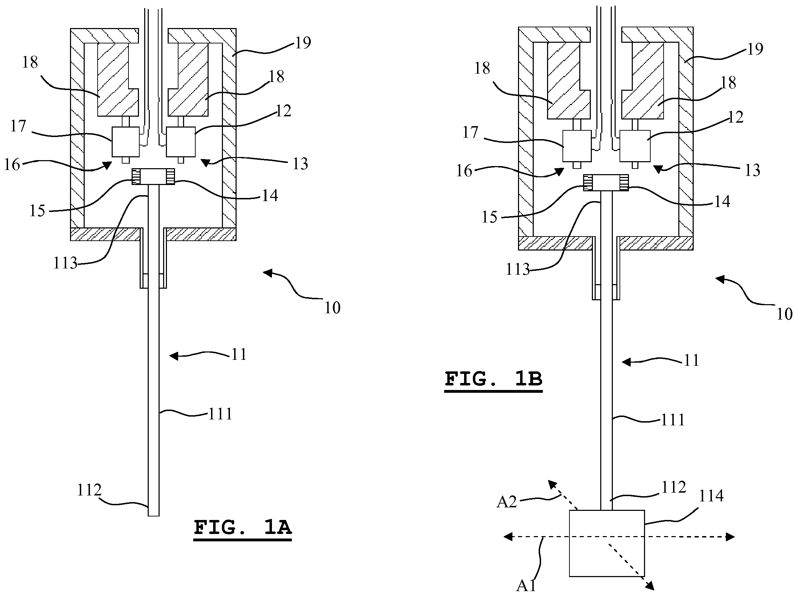

Les figures 1A et 1B sont des représentations schématiques de deux versions d'un dispositif de mesure mis en oeuvre selon l'invention pour la mesure de la viscosité d'un produit.

Quelle que soit la version, le dispositif de mesure 10 comporte un élément oscillant sensiblement rigide 11, des moyens de génération d'oscillation 12, 13, 14 prévus pour mettre en oscillation l'élément oscillant 11, ainsi que des moyens de réception 15, 16, 17 fournissant un signal de réception image de l'oscillation de l'élément oscillant 11.

L'élément oscillant 11 comprend un axe 111 (ou une tige ou encore une aiguille) comportant une extrémité de captation 112 adaptée pour être introduite au moins en partie dans le produit dont la viscosité est à déterminer, et une extrémité 113 couplée à la fois avec les moyens de génération d'oscillations 12, 13 et 14 et les moyens de réception 15, 16, 17.

Les moyens de génération d'oscillation, prévus pour mettre l'élément oscillant 11 en oscillations transversales par rapport à l'axe 111, comprennent un aimant permanent 14 à fort champ coercitif fixé à l'extrémité d'excitation, ou l'extrémité proximale, de l'élément oscillant 11. Cet aimant 14 est placé à proximité d'un électroaimant 13 muni d'une bobine motrice 12 à laquelle est appliqué un signal électrique d'excitation provenant d'une carte transducteur qui sera détaillée dans la suite de la description. L'ensemble électroaimant 13 et bobine 12 est porté par un support 18 solidaire du capot 19 du dispositif de mesure percé d'un premier trou permettant le passage des éléments de connexion du dispositif de mesure à une carte transducteur comportant les moyens de gestion du dispositif de mesure et la détermination de la viscosité du produit en fonction du signal de réception. Les moyens récepteurs 15, 16 et 17 prévus pour générer un signal image de l'oscillation de l'élément oscillant 11 comprennent un aimant permanent 15 fixé sur l'axe 111 de l'élément oscillant 11 du coté de l'extrémité d'excitation (ou proximale) 113. Cet aimant 15 est situé à proximité d'un électroaimant 16 muni d'une bobine réceptrice 17 dans laquelle les oscillations de l'aimant 15 génèrent un courant de réception image des oscillations de l'élément oscillant 11.

Dans la deuxième version du dispositif de mesure 10 représentée en figure 1B, l'élément oscillant 11 comporte en outre une plaque rigide 114, d'épaisseur faible, fixée de manière sensiblement rigide à l'extrémité 112 de l'axe 111. Lors des mesures cette plaque 114 est introduite au moins partiellement dans le produit.

Dans cette deuxième version, le dispositif de mesure permet de déterminer soit la viscosité du produit soit la densité du produit. Pour la mesure de la viscosité, l'élément oscillant 11 est mis en oscillation selon un axe A1 sensiblement parallèle au plan formé par la plaque 114. Pour la mesure de la densité d'un produit l'élément oscillant 11 est mis en oscillation selon un axe A2 sensiblement perpendiculaire au plan formé par la plaque 114.

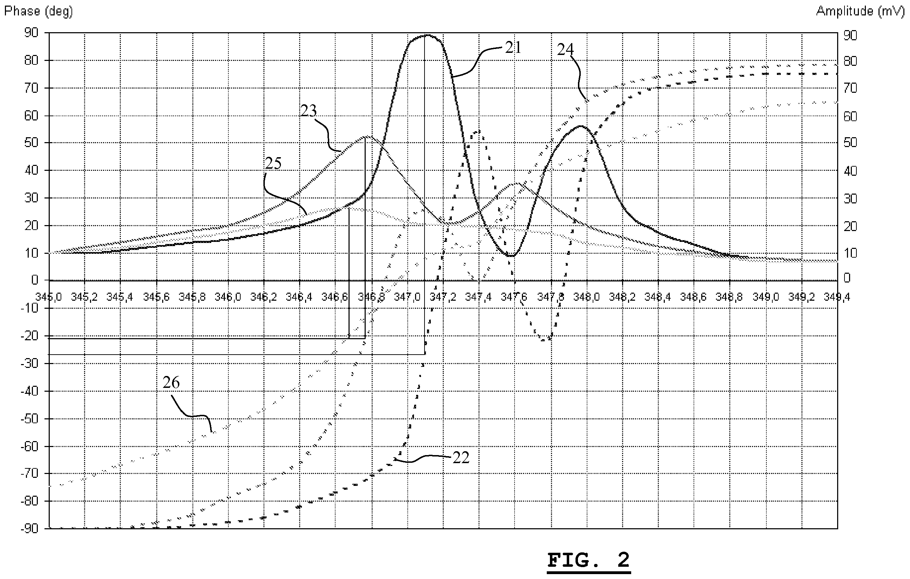

Selon l'invention, le signal d'excitation mettant l'élément oscillant 11 en oscillations est déphasé par rapport au signal de réception, d'un décalage de phase optimal, sensiblement fixe, correspondant à une amplitude maximale des oscillations. La figure 2 est un exemple de graphique donnant plusieurs exemples de décalage de phase optimal pour plusieurs gammes de viscosité pour un dispositif de mesure donné. Sur ce graphique la courbe 21 représente la variation de l'amplitude des oscillations de l'élément oscillant 11 dans l'air et la courbe 22 le décalage de phase correspondant. On constate ainsi que, dans l'air, le décalage de phase pour lequel l'amplitude des oscillations est maximale correspond à un décalage de phase d'environ - 26°. Ainsi, le décalage de phase optimal dans l'air est d'environ -26°. On constate également que la courbe 21 représentant l'amplitude des oscillations de l'élément oscillant 11 présente un deuxième pic, moins élevé que le premier, et correspondant à un décalage de phase 38°.

Toujours sur la figure 2, la courbe 23 représente la variation de l'amplitude des oscillations de l'élément oscillant 11 pour une viscosité de 100cP. La courbe 24 représente le décalage de phase correspondant. Ainsi, à 100cP, le décalage de phase optimal est d'environ -21°. La courbe 23 représente aussi un deuxième pic, correspondant à une amplitude plus faible et un décalage de phase de +29° environ.

La courbe 25 sur la figure 2, représente la variation de l'amplitude des oscillations de l'élément oscillant 11 pour une viscosité de 1000cP. La courbe 26 représente le décalage de phase correspondant. Ainsi, à 1000cP, le décalage de phase optimal est d'environ -21°.

La valeur du décalage de phase est déterminée, par itérations, lors d'une phase préalable à une ou plusieurs phases de mesure.

Le dispositif de mesure 10 est relié à une carte transducteur réalisant la gestion du dispositif de mesure.

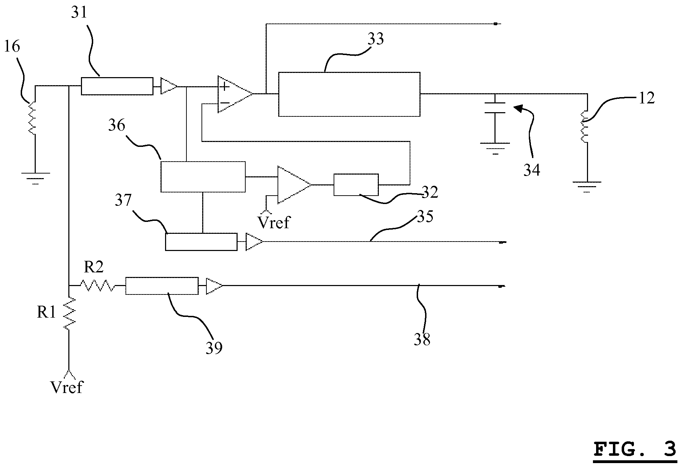

Selon un premier mode de réalisation du système, la chaîne de traitement des signaux pour la gestion du dispositif est réalisée de manière analogique. La figure 3 donne une représentation schématique d'une carte transducteur 30 comportant une chaîne de traitement analogique du dispositif de mesure 10.

La première fonction de la carte transducteur 30 est d'alimenter la bobine motrice 12 avec un signal électrique d'excitation d'intensité crête-crête constante, de fréquence égale à la fréquence du signal électrique de réception provenant de la bobine réceptrice 17 et présentant un décalage de phase optimal par rapport au signal de réception. Le signal électrique émis par la bobine réceptrice 17, est tout d'abord filtré par un filtre passe-bas 31, puis amplifié. Cette tension est ensuite comparée à la tension provenant d'un trigger 32 :
- si cette tension est supérieure à celle du trigger 32, un générateur de signaux 33 produit un courant dont la fréquence est identique à la fréquence du signal provenant de la bobine réceptrice 16.
- si la tension est inférieure à la tension du trigger 32, le générateur de signaux 33 produit des impulsions très brèves afin de permettre la mise en vibration de l'élément oscillant 11. C'est notamment le cas lors du démarrage de l'oscillation de l'élément oscillant 11.

Pour maximiser la puissance magnétique dans la bobine motrice 12, et donc maximiser l'amplitude des oscillations de l'élément oscillant, la carte transducteur 30 comporte une capacité d'accord 34. Celle-ci va ajuster le déphasage entre le signal d'excitation et le signal de réception qui est image de la position de l'axe 111 de l'élément oscillant 11, de manière à ce que le décalage de phase entre le signal d'excitation et le signal de réception soit sensiblement identique au décalage de phase optimal. Ainsi, en optimisant la valeur de la capacité d'accord 34, on ajuste le moment où la bobine motrice 12 va générer le maximum de champ magnétique au passage de l'axe 111 de l'élément oscillant 11. La valeur de la capacité d'accord 34 dépend de la longueur extérieure de l'axe 11 laquelle est ajustée en fonction de la gamme de viscosité voulue. Par exemple, pour une viscosité se trouvant autour de 100 cP, le décalage de phase optimal est d'environ -21°.

La deuxième fonction de la carte transducteur est de transmettre une tension continue 35 image de l'amplitude de vibration de l'axe 111 de l'élément oscillant 11. Cette fonction est réalisée à l'aide d'un redresseur mono-alternance 36, d'un filtre passe-bas 37 et d'un amplificateur. La tension continue résultante est transmise alors aux moyens de calculs qui vont alors convertir le signal électrique en une information de viscosité.

La troisième fonction de la carte transducteur 30 est de transmettre un signal 38 image de la température interne du dispositif de mesure 10. Cette information est transmise aux moyens de calcul (non représentés) afin de réaliser une correction de dérive thermique. Le signal 38 est une tension continue dont la valeur dépend de la résistance de la bobine réceptrice 16. La présence d'un pont diviseur alimenté (R1, R2, Vref) permet de polariser la bobine réceptrice 16. La variation de la résistance de la bobine réceptrice 16 va modifier l'intensité du courant circulant dans la résistance R2 et donc la tension aux bornes de celle-ci. Cette tension est ensuite filtrée à l'aide d'un filtre passe-bas 39 et amplifiée avant d'être transmise aux moyens de calcul.

Un signal électrique image de la fréquence du signal électrique de réception est transmis à des moyens de calcul (non représenté) pour la détermination de l'information de fréquence. Le circuit électrique permet ainsi à l'élément oscillant 11 de fonctionner en régime d'oscillations entretenues à fréquence de résonance.

Selon un deuxième mode de réalisation, les moyens de gestion du dispositif de traitement sont numériques et la chaîne de traitement des signaux est réalisée de manière numérique.

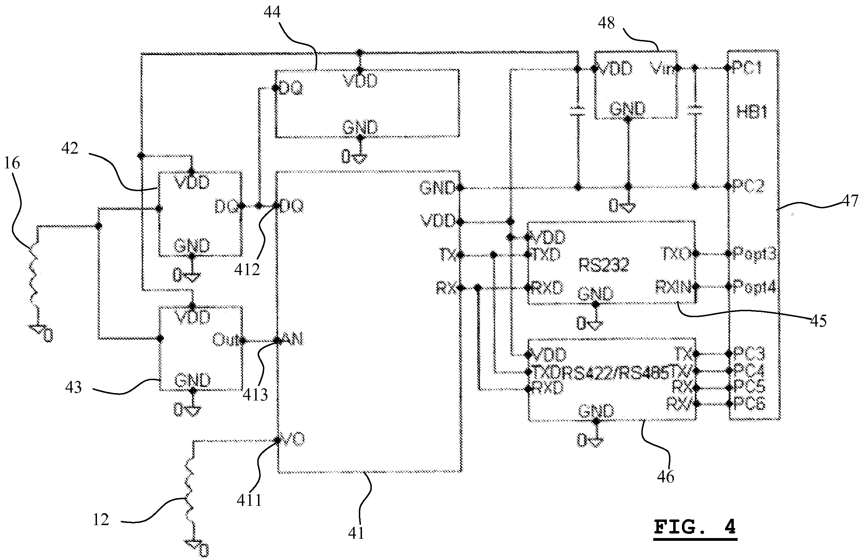

La figure 4 donne une représentation schématique d'une carte transducteur 40 comportant des moyens de gestion numériques.

Dans ce deuxième mode de réalisation, les différentes fonctions détaillées plus haut sont réalisées numériquement en collaboration avec un microcontrôleur 41. La carte transducteur comporte également un module 42 de mesure de la température du dispositif de mesure 10, un module 43 de mesure de l'amplitude des oscillations de l'élément oscillant 11, des moyens de mémorisation 44, des modules 45 et 46 de communication avec un dispositif externe ou des moyens de visualisation au format RS232, RS422 ou RS485 grâce à interface de connexion 47 et un module 48 d'alimentation des différents éléments de la carte transducteur 40.

Nous allons maintenant décrire les différentes fonctions réalisées par le microcontrôleur 41.

Le microcontrôleur 41 est agencé pour réaliser le déphasage du signal d'excitation de manière à ce qu'il y ait un décalage de phase optimal entre le signal d'excitation et le signal de réception. Ainsi, le microcontrôleur fournit, à la bobine réceptrice 12, un signal d'excitation déphasé par une sortie 411. Le déphasage est réalisé de manière numérique.

Le microcontrôleur 41 est en outre agencé pour réaliser de manière numérique la correction de dérive thermique. Le microcontrôleur 41, relié au module 42 de mesure de la température de la bobine réceptrice 16, reçoit de la part de ce module 42 un signal proportionnel à la température de la bobine réceptrice 16 à son entrée 412. Cette information de température est utilisée par le microcontrôleur 41 pour réaliser, en temps réel, la correction de dérive thermique sur les mesures de viscosité effectuées.

Le microcontrôleur 41 réalise aussi la détermination du décalage de phase optimal. Le microcontrôleur 41 reçoit, de la part du module 43 de mesure de l'amplitude des oscillations de l'élément oscillant 11, l'amplitude des oscillations à son entrée 413. Ainsi en réalisant une mesure de l'amplitude des oscillations pour différentes valeurs de décalage de phase entre le signal d'excitation et le signal de réception, le microcontrôleur 41 détermine le décalage de phase optimal correspondant à une amplitude maximale des oscillations de l'élément oscillant 11.

En fonction du signal de réception, le microcontrôleur 41 calcule de manière numérique la viscosité du produit.

Le microcontrôleur 41 intègre en outre une conversion analogique-numérique des différents signaux analogiques entrant dans le microcontrôleur 41 et une conversion numérique-analogique des signaux analogiques sortant du microcontrôleur 41.

Le décalage de phase optimal, déterminé par le microcontrôleur 41, est mémorisé dans les moyens de mémorisation 44 reliés au microcontrôleur. D'autres informations, telles que la variation de la température de la bobine réceptrice 16, la valeur de la viscosité, peuvent être mémorisées dans les moyens de mémorisation 44.

Par ailleurs, les moyens de mémorisation peuvent être accédés par un dispositif externe relié à la carte transducteur 40 au moyen de l'interface 47. La communication entre la carte transducteur 40 et le dispositif externe est réalisée au format bus.

Les moyens de mémorisation et/ou le microcontrôleur sont accédés pour la sélection d'une valeur prédéterminée de décalage de phase optimal pour une gamme de viscosité préenregistrée.

Les moyens de mémorisation peuvent aussi comprendre les valeurs de viscosité utilisées par le système selon l'invention lors d'une phase d'initialisation du système.

Toutes ces fonctions réalisées par la carte transducteur 40 rendent le système selon l'invention intelligent et presque autonome.

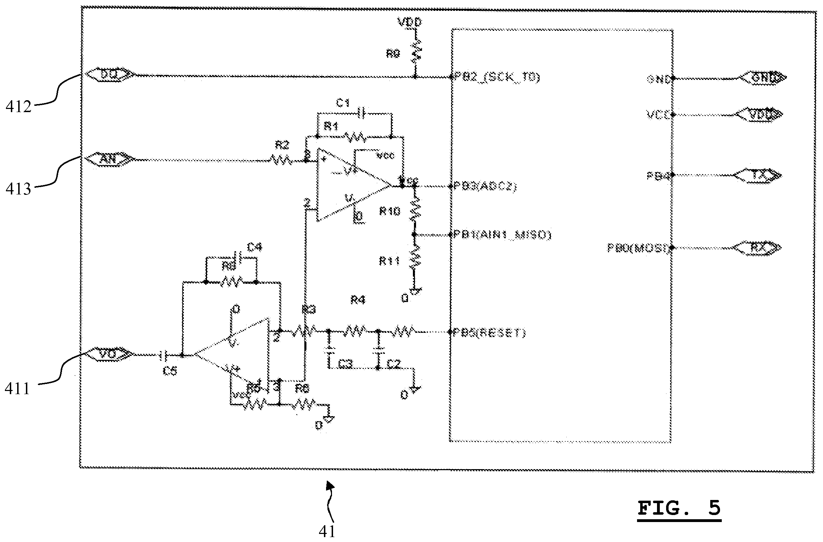

La figure 5 donne une représentation d'un exemple d'un microcontrôleur 41.

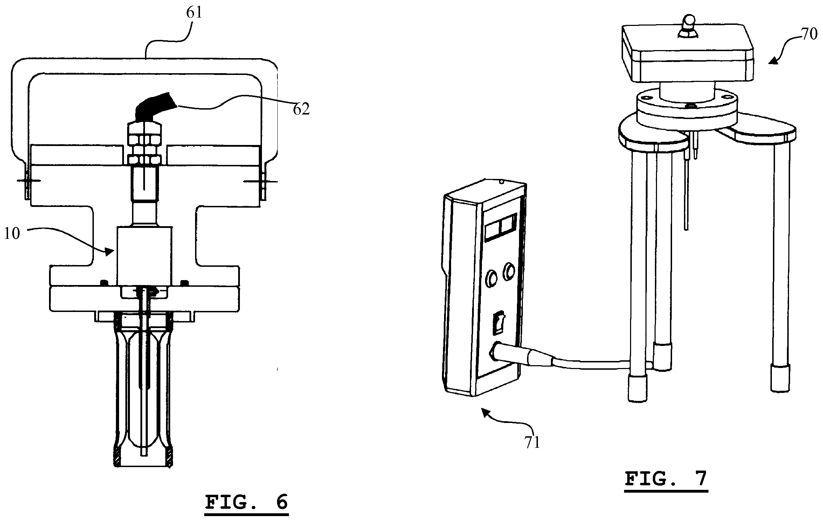

Par ailleurs, dans ce mode de réalisation, la carte transducteur 40 présente des dimensions faibles. Ainsi, le dispositif de mesure 10 et la carte transducteur peuvent être intégré dans un même ensemble de dimensions faibles et portable. Le système selon l'invention peut ainsi se présenter sous la forme d'un ensemble unique 60, portable, dont un exemple est représenté de manière schématique en figure 6. L'ensemble 60 comporte une poignée 61 permettant à l'utilisateur de le porter facilement. L'ensemble 60 intègre le dispositif de mesure 10 et la carte transducteur 40. L'ensemble 60 comprend en outre une batterie (non représentée) et une communication filaire avec des moyens de visualisation (non représenté) au moyen d'une connexion filaire 62.

Dans ce deuxième mode de réalisation, le système selon l'invention peut aussi se présenter sous la forme d'un ensemble 70 unique mais non portable, dont un exemple est représenté schématiquement en figure 7. Dans cette version, le système selon l'invention comporte des moyens (non représenté) de communication sans fil avec des moyens 71 de visualisation et de commande à distance.

Ce deuxième mode de réalisation, mettant en oeuvre une chaîne de traitement et de gestion numérique du dispositif de mesure 10 est le mode de réalisation préféré du système selon l'invention.

Bien entendu, l'invention n'est pas limitée à l'exemple détaillé ci-dessus. L'invention peut être mise en oeuvre pour la détermination de la viscosité d'un produit plus ou moins liquide. Par ailleurs, plusieurs microcontrôleurs peuvent être utilisés et d'autres fonctions peuvent être intégrées dans la carte transducteur.

## Revendications

1. Procédé de mesure de la viscosité d'un produit, mettant en oeuvre un dispositif (10) de mesure de viscosité comprenant un élément oscillant (11) comportant une extrémité de captation (112) adaptée pour être introduite au moins en partie dans ledit produit et une extrémité d'excitation (113) couplée à des moyens (12,13,14), dits d'excitation, provoquant l'oscillation dudit élément oscillant (11) au moyen d'un signal électrique, dit d'excitation, l'oscillation dudit élément oscillant (11) provoquant un signal électrique, dit de réception, dans des moyens (15,16,17), dits de réception, ladite viscosité du produit étant déterminée en fonction dudit signal de réception, ledit procédé comprenant :
- une première phase de détermination d'un décalage de phase, dit optimal, entre ledit signal de réception et ledit signal d'excitation correspondant à une amplitude maximale d'oscillations dudit élément oscillant (11), et
- une deuxième phase, dite de mesure, comprenant une mise en oscillation dudit élément oscillant (11) au moyen dudit signal d'excitation, ledit signal d'excitation présentant un décalage de phase sensiblement identique audit décalage de phase optimal par rapport audit signal de réception de manière à maximiser les oscillations dudit élément oscillant (11).
le procédé étant **caractérisé en ce que** ladite phase de détermination d'un décalage de phase optimal est commune à plusieurs phases de mesure, ladite phase de détermination de décalage de phase optimal fournissant une pluralité de décalages de phase optimaux, chacun des décalages de phases optimaux correspondant à une gamme de viscosité utilisée lors des phases de mesure postérieures, le procédé comprenant en outre, pour un dispositif de mesure donné, une sélection d'une gamme de viscosité et du décalage de phase optimal prédéterminé pour ladite gamme de viscosité lors d'une phase de mesure.

2. Procédé selon la revendication 1, **caractérisé en ce que** la détermination du décalage de phase optimal est réalisée par la détermination de l'amplitude du signal de réception en fonction du décalage de phase entre le signal de réception et le signal d'excitation.

3. Procédé selon l'une quelconque des revendications précédentes, **caractérisé en ce que** l'élément oscillant (11) oscille en régime d'oscillations propres entretenues.

4. Procédé selon l'une quelconque des revendications précédentes, **caractérisé en ce que** l'élément oscillant (11) est en oscillations transversales.

5. Procédé selon l'une quelconque des revendications 1 à 4, **caractérisé en ce que** l'élément oscillant (11) est en oscillations autour de l'axe (111) dudit élément oscillant (11).

6. Procédé selon l'une quelconque des revendications précédentes, **caractérisé en ce que** le signal d'excitation a une intensité crête-crête constante et une fréquence sensiblement égale à la fréquence du signal de réception.

7. Procédé selon l'une quelconque des revendications précédentes, **caractérisé en ce qu'**il comprend une correction de dérive thermique en fonction de la température de l'élément oscillant (11), ladite correction étant proportionnelle à la variation de la température dudit élément oscillant (11).

8. Système pour déterminer la viscosité d'un produit comprenant :
- un dispositif de mesure (10), comportant :
• un élément oscillant (11) comportant une extrémité captation (112) adaptée pour être introduite au moins en partie dans ledit produit et une extrémité d'excitation (113),
• des moyens (12, 13, 14), dits d'excitation, couplés à l'extrémité d'excitation (113) dudit élément oscillant (11) provoquant l'oscillation dudit élément oscillant (11) au moyen d'un signal électrique, dit d'excitation, et
• des moyens (15, 16, 17), dits de réception, adaptés pour générer un signal électrique, dit de réception, provoqué par l'oscillation dudit élément oscillant (11) ; et
- des moyens de gestion numériques dudit dispositif de mesure (10) agencés pour réaliser :
• un déphasage dudit signal d'excitation d'un décalage de phase, dit optimal, par rapport audit signal de réception de manière à obtenir une amplitude d'oscillation maximale, ledit décalage de phase optimal étant déterminé en fonction dudit produit et dudit élément oscillant (11), et
• une détermination par calcul de la viscosité dudit produit en fonction dudit signal de réception ;
le système étant **caractérisé en ce que** lesdits moyens de gestion numériques comprennent des moyens de mémorisation (44), reliés auxdits moyens de gestion numériques (41), dans lesquels sont mémorisés plusieurs décalages de phase optimaux, chacun des décalages de phase optimaux correspondant à une gamme de viscosité, et
ledit système comprenant en outre des moyens de sélection d'un décalage de phase optimal parmi une pluralité de décalages de phase optimaux mémorisés dans lesdits moyens de mémorisation (44).

9. Système selon la revendication 8, **caractérisé en ce que** les moyens de gestion comprennent au moins un microcontrôleur (41).

10. Système selon la revendication 9, **caractérisé en ce que** le microcontrôleur (41) comporte une entrée pour le signal de réception et une sortie pour le signal d'excitation, ledit microcontrôleur (41) réalisant le déphasage dudit signal d'excitation par rapport au signal de réception d'un décalage de phase correspondant sensiblement au décalage de phase optimal.

11. Système selon l'une quelconque des revendications 8 à 10, **caractérisé en ce que** les moyens de gestion comprennent en outre au moins module (43) de mesure de l'amplitude des oscillations de l'élément oscillant (11) en fonction du signal de réception.

12. Système selon la revendication 11, **caractérisé en ce que** le module de mesure de l'amplitude des oscillations comprend au moins un capteur à effet hall.

13. Système selon l'une quelconque des revendications 11 ou 12, **caractérisé en ce que** le microcontrôleur (41) est relié au module (43) de mesure de l'amplitude des oscillations, ledit microcontrôleur (41) étant en outre agencé pour la détermination d'au moins un décalage de phase optimal par itérations de mesure de l'amplitude des oscillations en fonction du décalage de phase.

14. Système selon l'une quelconque des revendications 9 à 13, **caractérisé en ce que** les moyens de gestion comprennent en outre au moins un module (42) de mesure de la température de l'élément oscillant (11) relié au microcontrôleur (41), ledit microcontrôleur (41) réalisant une correction numérique de dérive thermique sur les mesures de viscosité.

15. Système selon l'une quelconque des revendications 9 à 14, **caractérisé en ce que** le microcontrôleur (41) comprend en outre au moins une sortie de données, vers un dispositif ou système externe sous forme d'une connexion RS232, RS422, RS485 et/ou USB.

16. Système selon l'une quelconque des revendications 9 à 15, **caractérisé en ce que** ledit microcontrôleur (41) intègre au moins un convertisseur analogique-numérique réalisant une conversion analogique-numérique d'un signal entrant dans ledit microcontrôleur (41) et/ou un convertisseur numérique-analogique réalisant une conversion numérique-analogique d'un signal sortant dudit microcontrôleur (41).

17. Système selon l'une quelconque des revendications 8 à 16, **caractérisé en ce qu'**il comprend en outre des moyens de visualisation (71) de la viscosité mesurée.

18. Système selon l'une quelconque des revendications 8 à 17, **caractérisé en ce que** les moyens de gestion comprennent en outre des moyens de batterie, alimentant ledit système.

19. Système selon l'une quelconque des revendications 8 à 18, **caractérisé en ce qu'**il se présente sous la forme d'un ensemble (60) unique, portable, dans lequel sont intégrés le dispositif de mesure (10) et tout ou partie des moyens de gestion.

## Patentansprüche

1. Verfahren zur Messung der Viskosität eines Produkts, welches eine Vorrichtung (10) zur Messung der Viskosität einsetzt, die ein Schwingelement (11) umfasst, welches ein zur mindestens teilweisen Einführung in das Produkt geeignete Einfangende (112) und ein Anregungsende (113) beinhaltet, das mit sogenannten Anregungsmitteln (12, 13, 14) gekoppelt ist, die die Schwingung des Schwingelements (11) mithilfe von einem elektrischen, sogenannten Anregungssignal auslösen, wobei die Schwingbewegung des Schwingelements (11) ein elektrisches, sogenanntes Empfangssignal in sogenannten Empfangsmitteln (15, 16, 17) generiert, wobei die Viskosität des Produkts in Abhängigkeit von dem Empfangssignal bestimmt wird, umfassend:
- eine erste Phase zur Bestimmung einer sogenannten optimalen Phasenverschiebung zwischen dem Empfangssignal und dem Anregungssignal, welche einer maximalen Schwingungsweite des Schwingelements (11) entspricht, und
- eine zweite, sogenannte Messphase, umfassend eine Oszillation des Schwingelements (11) mithilfe von dem Anregungssignal, wobei das Anregungssignal eine Phasenverschiebung aufweist, die im Wesentlichen gleich der optimalen Phasenverschiebung im Verhältnis zu dem Empfangssignal ist, um die Schwingbewegungen des Schwingelements (11) zu maximieren,
**dadurch gekennzeichnet, dass** die Phase zur Bestimmung einer optimalen Phasenverschiebung für mehrere Messphasen gleich ist, wobei die Phase zur Bestimmung der optimalen Phasenverschiebung eine Vielzahl von optimalen Phasenverschiebungen liefert, wobei jede der optimalen Phasenverschiebungen einer bei den nachfolgenden Messphasen verwendeten Viskositätspalette entspricht, wobei das Verfahren außerdem für eine bestimmte Messvorrichtung eine Auswahl aus einer Viskositätspalette und der optimalen, für die Viskositätspalette bei einer Messphase vorbestimmten Phasenverschiebung umfasst.

2. Verfahren nach Anspruch 1, **dadurch gekennzeichnet, dass** die Bestimmung der optimalen Phasenverschiebung durch die Bestimmung der Amplitude des Empfangssignals in Abhängigkeit von der Phasenverschiebung zwischen dem Empfangssignal und dem Anregungssignal erfolgt.

3. Verfahren nach einem der vorhergehenden Ansprüche, **dadurch gekennzeichnet, dass** das Schwingelement (11) in eigener, ungedämpfter Schwingungsfrequenz schwingt.

4. Verfahren nach einem der vorhergehenden Ansprüche, **dadurch gekennzeichnet, dass** das Schwingelement (11) in Querschwingungen schwingt.

5. Verfahren nach einem der vorhergehenden Ansprüche 1 bis 4, **dadurch gekennzeichnet, dass** das Schwingelement (11) um die Mittellinie (111) des Schwingelements (11) herum schwingt.

6. Verfahren nach einem der vorhergehenden Ansprüche, **dadurch gekennzeichnet, dass** das Anregungssignal eine gleichbleibende Spitze-Spitze-Intensität sowie eine Frequenz im Wesentlichen gleich der Frequenz des Empfangssignals hat.

7. Verfahren nach einem der vorhergehenden Ansprüche, **dadurch gekennzeichnet, dass** es eine Korrektur des Wärmedrifts in Abhängigkeit von der Temperatur des Schwingelements (11) umfasst, wobei die Korrektur proportionell zur Temperaturschwankung des Schwingelements (11) erfolgt.

8. System zur Bestimmung der Viskosität eines Produkts, umfassend:
- eine Messvorrichtung (10), beinhaltend:
• ein Schwingelement (11) mit einem zur mindestens teilweisen Einführung in das Produkt geeigneten Einfangende (112) und einem Anregungsende (113),
• sogenannte Anregungsmittel (12, 13, 14), mit dem Anregungsende (113) des Schwingelements (11) gekoppelt, das die Schwingbewegung des Schwingelements (11) mithilfe von einem elektrischen, sogenannten Anregungssignal auslöst, und
• sogenannte Empfangsmittel (15, 16, 17), die dazu geeignet sind, ein elektrisches, sogenannte Empfangssignal zu erzeugen, das durch die Schwingung des Schwingelements (11) ausgelöst wird; und
- digitale Mittel zur Verwaltung der Messvorrichtung (10), ausgebildet zur Durchführung:
• einer Phasenverschiebung des Anregungssignals für eine sogenannte optimale Phasenverschiebung im Verhältnis zum Empfangssignal, um eine maximale Schwingungsweite zu erreichen, wobei die optimale Phasenverschiebung in Abhängigkeit von dem Produkt und dem Schwingelement (11) bestimmt wird; und
• einer Berechnung der Viskosität des Produkts in Abhängigkeit von dem Empfangssignal;
wobei das System **dadurch gekennzeichnet ist, dass** die digitalen Verwaltungsmittel mit den digitalen Verwaltungsmitteln (41) verbundene Speichermittel (44) umfassen, in welchen mehrere optimale Phasenverschiebungen gespeichert sind, wobei jede der optimalen Phasenverschiebungen einer Viskositätspalette entspricht und
wobei das System außerdem Mittel zur Auswahl einer optimalen Phasenverschiebung aus einer Vielzahl von optimalen, in den Speichermitteln (44) gespeicherten Phasenverschiebungen umfasst.

9. System nach Anspruch 8, **dadurch gekennzeichnet, dass** die Verwaltungsmittel mindestens einen Mikrocontroller (41) umfassen.

10. System nach Anspruch 9, **dadurch gekennzeichnet, dass** der Mikrocontroller (41) einen Eingang für das Empfangssignal und einen Ausgang für das Anregungssignal beinhaltet, wobei der Mikrocontroller (41) die Phasenverschiebung des Anregungssignals im Verhältnis zum Empfangssignal einer Phasenverschiebung ausführt, welche im Wesentlichen der optimalen Phasenverschiebung entspricht.

11. System nach einem der Ansprüche 8 bis 10, **dadurch gekennzeichnet, dass** die Verwaltungsmittel außerdem mindestens ein Modul (43) zur Messung der Schwingungsweite des Schwingelements (11) in Abhängigkeit von dem Empfangssignal umfassen.

12. System nach Anspruch 11, **dadurch gekennzeichnet, dass** das Modul zur Messung der Schwingungsweite mindestens einen Hallsensor umfasst.

13. System nach einem der Ansprüche 11 oder 12, **dadurch gekennzeichnet, dass** der Mikrocontroller (41) mit dem Modul (43) zur Messung der Schwingungsweite verbunden ist, wobei der Mikrocontroller (41) außerdem zur Bestimmung mindestens einer optimalen Phasenverschiebung durch Iterationen der Messungen der Schwingungsweiten in Abhängigkeit von der Phasenverschiebung ausgebildet ist.

14. System nach einem der Ansprüche 9 bis 13, **dadurch gekennzeichnet, dass** die Verwaltungsmittel außerdem mindestens ein Modul (42) zur Messung der Temperatur des mit dem Mikrocontroller (41) verbundenen Schwingelements (11) umfassen, wobei der Mikrocontroller (41) eine digitale Korrektur des Wärmedrifts an den Viskositätsmessungen vornimmt.

15. System nach einem der Ansprüche 9 bis 14, **dadurch gekennzeichnet, dass** der Mikrocontroller (41) außerdem mindestens einen Datenausgang zu einer externen Vorrichtung oder einem externen System hin in Form eines RS232, RS422, RS485 und/oder USB-Anschlusses umfasst.

16. System nach einem der Ansprüche 9 bis 15, **dadurch gekennzeichnet, dass** im Mikrocontroller (41) mindestens ein analog-digitaler Konverter, welcher eine analogdigitale Umwandlung eines in den Mikrocontroller (41) eingehenden Signals ausführt, und/oder ein digital-analoger Konverter, welcher eine digital-analoge Umwandlung eines aus dem Mikrocontroller (41) ausgehenden Signals ausführt, eingebaut sind.

17. System nach einem der Ansprüche 8 bis 16, **dadurch gekennzeichnet, dass** es außerdem Mittel zur Anzeige (71) der bemessenen Viskosität umfasst:

18. System nach einem der Ansprüche 8 bis 17, **dadurch gekennzeichnet, dass** die Verwaltungsmittel außerdem Batteriemittel zur Versorgung des Systems umfassen.

19. System nach einem der Ansprüche 8 bis 18, **dadurch gekennzeichnet, dass** es die Form einer einzelnen, tragbaren Anordnung (60) aufweist, in welcher die Messvorrichtung (10) und die vollständigen Verwaltungsmittel oder ein Teil davon eingebaut sind.

## Claims

1. Method for measuring the viscosity of a product, utilizing a viscosity measurement device (10) comprising an oscillating element (11) comprising a collection end (112) arranged for being introduced at least partially into said product and an excitation end (113) coupled to means (12,13,14), called excitation means, producing the oscillation of said oscillating element (11) by means of an electrical signal, called excitation signal, the oscillation of said oscillating element (11) producing an electrical signal, called reception signal, in means (15,16,17), called reception means, said viscosity of the product being determined as a function of said reception signal, said method comprising:
- a first phase of determination of a phase shift, called optimal phase shift, between said reception signal and said excitation signal corresponding to a maximum amplitude of oscillations of said oscillating element (11), and
- a second phase, called measurement phase, comprising oscillating said oscillating element (11) by means of said excitation signal, said excitation signal having a phase shift substantially identical to said optimal phase shift with respect to said reception signal so as to maximize the oscillations of said oscillating element (11).
the method being **characterized in that** said phase of determination of an optimal phase shift is common to several measurement phases, said phase of determination of the optimal phase shift providing a plurality of optimal phase shifts, each of the optimal phase shifts corresponding to a viscosity range used during subsequent measurement phases, the method comprising moreover, for a given measurement device, a selection of a viscosity range and of the predetermined optimal phase shift for said viscosity range during a measurement phase.

2. Method according to claim 1, **characterized in that** the determination of the optimal phase shift is carried out by the determination of the amplitude of the reception signal as a function of the phase shift between the reception signal and the excitation signal.

3. Method according to any one of the preceding claims, **characterized in that** the oscillating element (11) oscillates in a regime of maintained natural oscillations.

4. Method according to any one of the preceding claims, **characterized in that** the oscillating element (11) is in transverse oscillations.

5. Method according to any one of claims 1 to 4, **characterized in that** the oscillating element (11) is oscillating about the shaft (111) of said oscillating element (11).

6. Method according to any one of the preceding claims, **characterized in that** the excitation signal has a constant peak-to-peak intensity and a frequency substantially equal to the frequency of the reception signal.

7. Method according to any one of the preceding claims, **characterized in that** it comprises a thermal zero point correction as a function of the temperature of the oscillating element (11), said correction being proportional to the variation in the temperature of said oscillating element (11).

8. System for determining the viscosity of a product comprising:
- a measurement device (10), comprising:
• an oscillating element (11) comprising a collection end (112) arranged for being introduced at least partially into said product and an excitation end (113),
• means (12, 13, 14), called excitation means, coupled to the excitation end (113) of said oscillating element (11) producing the oscillation of said oscillating element (11) by means of an electrical signal, called excitation signal, and
• means (15, 16, 17), called reception means, capable of generating an electrical signal, called reception signal, produced by the oscillation of said oscillating element (11); and
- digital means for managing said measurement device (10) arranged in order to carry out:
• a phase difference of said excitation signal of a phase shift, called optimal phase shift, with respect to said reception signal so as to obtain a maximum oscillation amplitude, said optimal phase shift being determined as a function of said product and of said oscillating element (11), and
• a determination by calculation of the viscosity of said product as a function of said reception signal;
the system being **characterized in that** said digital management means comprise storage means (44), connected to said digital management means (41), in which several optimal phase shifts are stored, each of the optimal phase shifts corresponding to a viscosity range, and
said system comprising moreover means for selecting an optimal phase shift from a plurality of optimal phase shifts stored in said storage means (44).

9. System according to claim 8, **characterized in that** the management means comprise at least one microcontroller (41).

10. System according to claim 9, **characterized in that** the microcontroller (41) comprises an input for the reception signal and an output for the excitation signal, said microcontroller (41) producing the phase difference of said excitation signal with respect to the reception signal of a phase shift substantially corresponding to the optimal phase shift.

11. System according to any one of claims 8 to 10, **characterized in that** the management means moreover comprise at least module (43) for measuring the amplitude of the oscillations of the oscillating element (11) as a function of the reception signal.

12. System according to claim 11, **characterized in that** the module for measuring the amplitude of the oscillations comprises at least one Hall effect sensor.

13. System according to any one of claims 11 or 12, **characterized in that** the microcontroller (41) is connected to the module (43) for measuring the amplitude of the oscillations, said microcontroller (41) being moreover arranged for the determination of at least one optimal phase shift by measurement iterations of the amplitude of the oscillations as a function of the phase shift.

14. System according to any one of claims 9 to 13, **characterized in that** the management means moreover comprise at least one module (42) for measuring the temperature of the oscillating element (11) connected to the microcontroller (41), said microcontroller (41) carrying out a thermal zero point correction on the viscosity measurements.

15. System according to any one of claims 9 to 14, **characterized in that** the microcontroller (41) comprises moreover at least one data output, to an external device or system in the form of an RS232, RS422, RS485 and/or USB connection.

16. System according to any one of claims 9 to 15, **characterized in that** said microcontroller (41) incorporates at least one analogue-to-digital converter carrying out an analogue-to-digital conversion of a signal entering said microcontroller (41) and/or an digital-to-analogue converter carrying out an digital-to-analogue conversion of a signal leaving said microcontroller (41).

17. System according to any one of claims 8 to 16, **characterized in that** it comprises moreover means (71) of displaying the viscosity measured.

18. System according to any one of claims 8 to 17, **characterized in that** the management means moreover comprise battery means, supplying said system.

19. System according to any one of claims 8 to 18, **characterized in that** it is presented in the form of a single, portable unit (60) in which the measurement device (10) and all or part of the management means are incorporated.
